# EUROPEAN PATENT APPLICATION

(11) **EP 4 815 262 A1**
(43) Date of publication of application: **30.09.2026**
(21) Application number: 26161921.7
(22) Date of filing: 03.03.2026
(51) Int. Cl.: H02K 1/276

(54) **ROTATING ELECTRICAL MACHINE**

(30) Priority: 26.03.2025 JP 2025052068
(71) Applicant: KABUSHIKI KAISHA TOYOTA JIDOSHOKKI, Kariya-shi, Aichi 448-8671 (JP)
(72) Inventor: SAIJO, Masaki, Kariya-shi, Aichi, 448-8671 (JP)
(74) Representative: TBK

(57) **Abstract**

A rotating electrical machine (10) includes a rotor (20) that includes: a rotor core (21); and a plurality of permanent magnets (40) forming a magnetic pole (22). Each permanent magnet (40) has an arc shape that is convex toward an inner peripheral side of the rotor core (21), and has: a first arc surface (41) and a second arc surface (42) located on an outer peripheral side and the inner peripheral side of the rotor core (21), respectively. The permanent magnets (40) form two or more layers (S1-S3) that are arranged in a radially inward direction of the rotor core (21). The number of permanent magnets (40) per layer (S1-S3) increases by one in the radially inward direction. The permanent magnets (40) have the same shape. A distance (L1, L2) between the layers (S1-S3) adjacent to each other is smaller on the outer peripheral side than at a position distant from an outer periphery of the rotor core (21) along a circumferential width direction of each permanent magnet (40).

## Description

The present invention relates to a rotating electrical machine.

### BACKGROUND ART

The rotating electrical machine includes a stator and a rotor disposed inside of the stator. The rotating electrical machine is required to generate a high reluctance torque. For example, a motor mentioned in Japanese Patent Application Publication No. 2015-122838 includes permanent magnets embedded in an arc shape that is convex to the inside of the rotor and forming three or more layers. The permanent magnets include an outermost permanent magnet and inner permanent magnets located inward of the outermost magnet in the radially inward direction of the rotor. The central portion of each of the inner permanent magnets is thinner than the central portion of the outermost permanent magnet, and the end portion of each of the inner permanent magnets is thicker than the end portion of the outermost permanent magnet.

It is always desirable that such a rotating electrical machine achieves a high reluctance torque while maintaining a low manufacturing cost.

The present invention, which has been made in view of the above problems, is directed to providing a rotating electrical machine that achieves a high reluctance torque while maintaining a low manufacturing cost.

### SUMMARY

In accordance with an aspect of the present invention, there is provided a rotating electrical machine that includes: a stator; and a rotor disposed inside of the stator. The rotor includes: a rotor core having a plurality of insertion holes; and a plurality of permanent magnets respectively inserted into the plurality of insertion holes. The permanent magnets form a magnetic pole. Each of the permanent magnets has an arc shape that is convex toward an inner peripheral side of the rotor core, and has: a first arc surface located on an outer peripheral side of the rotor core; and a second arc surface located on the inner peripheral side of the rotor core. The permanent magnets form two or more layers that are arranged in a radially inward direction of the rotor core. The number of permanent magnets per layer increases by one in the radially inward direction of the rotor core. The permanent magnets have the same shape. A distance between the layers adjacent to each other is smaller on the outer peripheral side of the rotor core than at a position distant from an outer periphery of the rotor core along a circumferential width direction of each permanent magnet.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a cross-sectional view of a rotating electrical machine;
FIG. 2 is a view illustrating a first layer permanent magnet and second layer permanent magnets;
FIG. 3 is a view illustrating a first layer insertion hole to third layer insertion holes;
FIG. 4 is a view illustrating a magnetic pole;
FIG. 5 is a view illustrating the second layer permanent magnets and third layer permanent magnets; and
FIG. 6 is a view illustrating first to third recesses and projections.

### DETAILED DESCRIPTION OF THE EMBODIMENTS

The following will describe an embodiment of a rotating electrical machine with reference to the accompanying drawings.

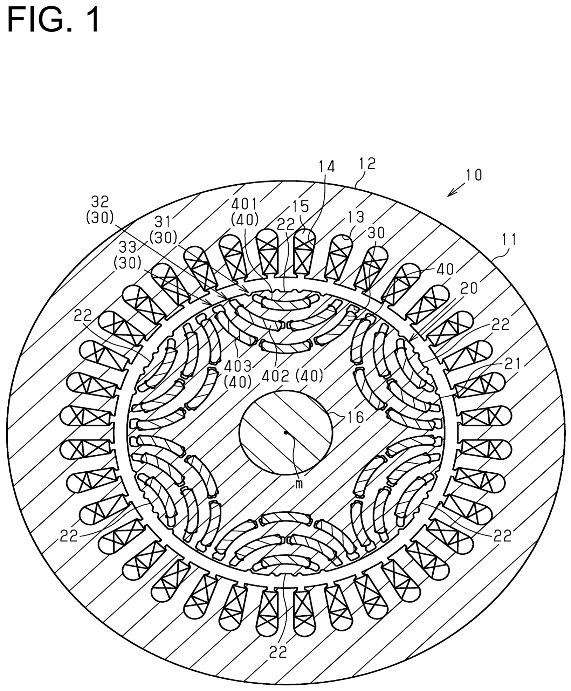

As illustrated in FIG. 1, a rotating electrical machine 10 includes a stator 11 and a rotor 20. The stator 11 has a cylindrical shape, and the rotor 20 is disposed inside of the stator 11. The inner peripheral surface of the stator 11 faces the outer peripheral surface of the rotor 20 with a gap therebetween. The rotating electrical machine 10 is a rotating electrical machine to which a high voltage, for example, several hundred volts, is applied.

The stator 11 includes a stator core 12 having a cylindrical shape. The stator core 12 has a plurality of slots 13. The slots 13 are opened on the inner peripheral surface of the stator core 12. A tooth 14 is disposed between the slots 13 adjacent to each other in the circumferential direction of the stator core 12. In other words, each of the slots 13 is located between the tooth 14 and the tooth 14 (i.e., the teeth 14) of the stator 11. A coil 15 is wound around the teeth 14. Three-phase alternating current is supplied to the coil 15, so that the stator 11 generates a rotating magnetic field that rotates in the circumferential direction of the stator 11. The magnetic flux generated in the stator 11 links the rotor 20. Accordingly, the rotating electrical machine 10 rotates.

The rotor 20 includes a rotor core 21 having a cylindrical shape and including a plurality of permanent magnets 40 that form a plurality of magnetic poles 22. The rotor core 21 is formed by a stack of a plurality of electromagnetic steel plates having a substantially disc-shape. The rotor 20 is fixed to a shaft 16 and rotates together with the shaft 16. The shaft 16 is rotatably supported by a housing (not illustrated) via a bearing (not illustrated) of the rotating electrical machine 10. The outer peripheral surface of the rotor core 21 faces the tip surface of each tooth 14 with a predetermined gap therebetween.

The rotor core 21 has a plurality of insertion holes 30. Each of the permanent magnets 40 is inserted into a corresponding one of the insertion holes 30. All of the insertion holes 30 have an arc shape that is convex toward an inner peripheral side of the rotor core 21, and the permanent magnets 40 inserted into the insertion holes 30 have an arc shape that is convex toward the inner peripheral side of the rotor core 21.

The rotor 20 has an inverse salient pole structure in which the permanent magnets 40 are arranged such that the permanent magnets 40 are convex toward the inner peripheral side of the rotor 20. The q-axis is electrically and magnetically perpendicular to the d-axis. Magnetic flux associated with the q-axis current flows mainly through the region between the circumferentially adjacent magnetic poles 22 (i.e., the permanent magnets 40) of the rotor core 21. Accordingly, at each magnetic pole 22 in such an inverse salient pole structure, the d-axis inductance is smaller than the q-axis inductance. Accordingly, the inverse salient pole structure allows the generation of a reluctance torque corresponding to the difference between the d-axis inductance and the q-axis inductance in addition to the generation of the magnetic torque by the permanent magnet 40. In the present embodiment, the rotor 20 includes six magnetic poles 22. The magnetic poles 22 adjacent to each other in the circumferential direction of the rotor 20 have opposite polarities. Accordingly, the rotor 20 has the north magnetic poles 22 and the south magnetic poles 22 formed alternately in the circumferential direction of the rotor 20.

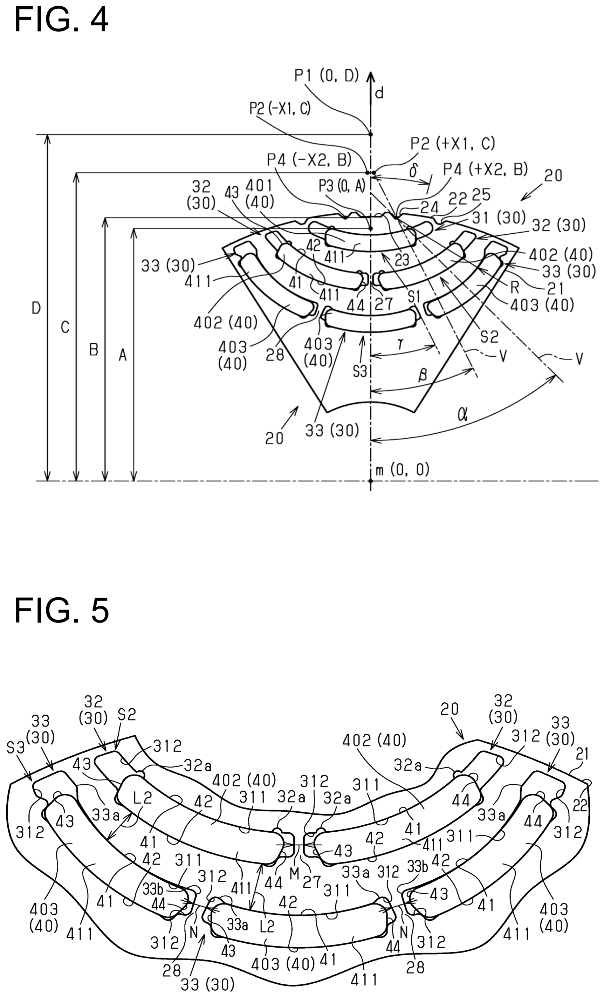

As illustrated in FIG. 4, the rotor core 21 includes six permanent magnets 40 per magnetic pole 22. In the present embodiment, the permanent magnets 40 are low residual magnetic flux density magnets. The permanent magnets 40 are, for example, ferrite magnets. The lower residual magnetic flux density of the permanent magnet 40 leads to a lower back electromotive force generated in the rotating electrical machine 10. The six permanent magnets 40 extend in a direction of an axis m of the rotor core 21. The direction of the axis m of the rotor core 21 is defined as the axial direction of the rotor 20. Each of the permanent magnets 40 has a bar-like shape that extends in the axial direction of the rotor 20, so that the axial direction of the permanent magnet 40 corresponds to the direction of the axis m. All the six permanent magnets 40 have the same shape. In the rotor core 21 of the present embodiment, the arc shaped permanent magnets 40 are radially magnetized in a direction perpendicular to the arc.

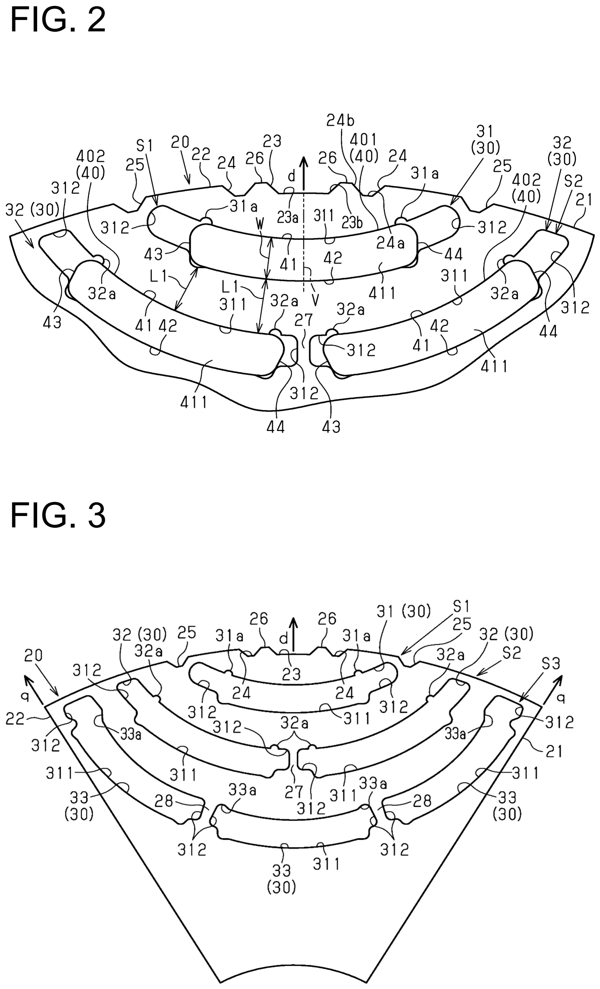

Each of the permanent magnets 40 has magnet end faces 411 at axially opposite ends of the permanent magnet 40, respectively. FIG. 2 illustrates one of the magnet end faces 411 only. When the rotor 20 is viewed in the axial direction, each of the permanent magnets 40 has a first arc surface 41 and a second arc surface 42 that are opposite surfaces in the radial direction of the permanent magnet 40, and further has a first end surface 43 and a second end surface 44 that are opposite end surfaces in the circumferential direction of the permanent magnet 40. The first arc surface 41, the second arc surface 42, the first end surface 43, and the second end surface 44 define the magnet end face 411. Viewing the rotor 20 in its axial direction will be referred to as an axial view.

In the axial view, the first arc surface 41 is located on the outer peripheral side of the rotor core 21, and the second arc surface 42 is located on the inner peripheral side of the rotor core 21. In the axial view, the first arc surface 41 and the second arc surface 42 have an arc shape. In the axial view, the arc length of the first arc surface 41 is equal to or approximately equal to the arc length of the second arc surface 42. Furthermore, in the axial view, one end of the first arc surface 41 is connected to one end of the second arc surface 42 by the first end surface 43, and the other end of the first arc surface 41 is connected to the other end of the second arc surface 42 by the second end surface 44. That is, the first end surface 43 and the second end surface 44 respectively connect opposite ends of the first arc surface 41 and the second arc surface 42. In the axial view, the first end surface 43 and the second end surface 44 define the circumferential width of the permanent magnet 40. The first end surface 43 and the second end surface 44 extend in a direction of an imaginary line V that passes through the widthwise center of the permanent magnet 40 and extends in the thickness direction defined between the first arc surface 41 and the second arc surface 42. The first end surface 43 is parallel to the second end surface 44.

In the axial view, the first end surface 43 and the second end surface 44 are substantially parallel to the imaginary line V and are parallel to each other. In other words, the first end surface 43 and the second end surface 44 do not extend in the radial direction of the rotor core 21 in the axial view. In the axial view, the four corners of the permanent magnet 40 are chamfered. The dimension of the permanent magnet 40 defined by the first arc surface 41 and the second arc surface 42 is the thickness of the permanent magnet 40 in the axial view, and the thickness of the permanent magnet 40 is uniform, excluding the thickness at the opposite ends of the permanent magnet 40.

As illustrated in FIGS. 2 and 3, each of the insertion holes 30 has an arc shape that is convex toward the inner peripheral side of the rotor core 21. Each of the insertion holes 30 includes a magnet insertion portion 311 and flux barrier forming portions 312 respectively on the opposite sides of the magnet insertion portion 311 in the longitudinal direction of the magnet insertion portion 311 in the axial view. The magnet insertion portion 311 is a portion into which the permanent magnet 40 is inserted. The flux barrier forming portions 312 are located outward of the magnet insertion portion 311, i.e., the permanent magnet 40, in the longitudinal direction of the insertion hole 30 in the axial view of the rotor core 21.

The magnet insertion portion 311 has an arc shape as a whole. The magnet insertion portion 311 has an arc shape that is convex toward the inner peripheral side of the rotor core 21. One of the flux barrier forming portions 312 forms a portion of the insertion hole 30 between the first end surface 43 of the permanent magnet 40 and one of the opposite ends of the insertion hole 30, and the other of the flux barrier forming portions 312 forms a portion of the insertion hole 30 between the second end surface 44 of the permanent magnet 40 and the other of the opposite ends of the insertion hole 30. That is, each of the flux barrier forming portion 312 forms a gap outward of the permanent magnet 40 in the magnet insertion portion 311. This gap forms a flux barrier on each of the opposite sides of the permanent magnet 40 of the rotor core 21 in the circumferential width direction of the permanent magnet 40.

As illustrated in FIG. 3, the rotor core 21 includes two layers or more, in this embodiment, specifically, three layers formed by the permanent magnets 40, namely, a first layer S1, a second layer S2, and a third layer S3 that are arranged in the radially inward direction of the rotor core 21. The insertion holes 30 are arranged so that the number of insertion holes 30 per layer increases by one in the radially inward direction of the rotor core 21. The first layer S1 is the outermost layer in the radially inward direction of the rotor core 21. The second layer S2 is located inward of the first layer S1 and between the first layer S1 and the third layer S3 in the radially inward direction of the rotor core 21. The third layer S3 is the innermost layer in the radially inward direction of the rotor core 21. The first layer S1 has one insertion hole 30, namely, a first layer insertion hole 31. The second layer S2 has two insertion holes 30, namely, second layer insertion holes 32. The third layer S3 has three insertion holes 30, namely, third layer insertion holes 33.

The first layer insertion hole 31, the second layer insertion holes 32, and the third layer insertion hole 33 are arranged in this order from the outer peripheral side of the rotor core 21 toward the inner peripheral side of the rotor core 21. The first layer insertion hole 31, the second layer insertion holes 32, and the third layer insertion holes 33 have different shapes.

The permanent magnets 40 are inserted into the first layer insertion hole 31, the second layer insertion holes 32, and the third layer insertion holes 33, respectively. That is, the permanent magnets 40 are arranged so that the number of permanent magnets 40 per permanent magnet layer increases by one in the radially inward direction of the rotor core 21. The permanent magnets 40 include a first layer permanent magnet 401 in the first layer S1, which is the outermost layer of the rotor core 21, two second layer permanent magnets 402 in the second layer S2, which is the layer between the first layer S1 and the third layer S3 in the radially inward direction of the rotor core 21, and three third layer permanent magnets 403 in the third layer S3, which is the innermost layer of the rotor core 21.

As illustrated in FIGS. 2 and 4, the d-axis of the magnetic pole 22 passes through the widthwise center of the first layer permanent magnet 401, which is inserted into the first layer insertion hole 31. In other words, the first layer permanent magnet 401 is located on the d-axis of the magnetic pole 22. The first arc surface 41 of the first layer permanent magnet 401 extends along an arc centered at a first curvature center P1. In the two-dimensional coordinate system, the axis m of the rotor core 21 is located at the coordinates (0, 0). The first curvature center P1 is located at the coordinates (0, D) in the two-dimensional coordinate system. That is, the first curvature center P1 is located at a position radially spaced apart from the axis m of the rotor core 21 by a distance of the coordinate value [D].

In the present embodiment, the first layer insertion hole 31 of the rotor core 21 has a plurality of first extending holes 31a. Each of the first extending holes 31a extends toward the outer peripheral side of the rotor 20 relative to the first arc surface 41. Specifically, the first extending holes 31a extend toward the outer peripheral side of the rotor 20 from a position corresponding to the intersection of the first end surface 43 and the first arc surface 41 and from a position corresponding to the intersection of the second end surface 44 and the first arc surface 41, respectively. The flux barrier forming portions 312 of the first layer insertion hole 31 respectively extend from the first extending holes 31a of the first layer insertion hole 31 so as to approach the outer peripheral surface of the rotor core 21.

The first arc surface 41 of the second layer permanent magnet 402 inserted into each of the second layer insertion holes 32 extends along an arc centered at a second curvature center P2. In the two-dimensional coordinate system, the second curvature center P2 of the first arc surface 41 of one of the second layer permanent magnets 402 is located at the coordinates (+X1, C), and the second curvature center P2 of the first arc surface 41 of the other of the second layer permanent magnets 402 is located at the coordinates (-X1, C). The absolute value of [+X1] and the absolute value of [-X1] are the same. Accordingly, each second curvature center P2 is located at (X1, C). That is, in the two-dimensional cross section of the rotor 20, each of the two second curvature centers P2 is located at a position offset toward the q-axis within the magnetic pole 22 by the coordinate value [X1], i.e., distance [X1], from the d-axis of the magnetic pole 22. Accordingly, the two second layer permanent magnets 402 are arranged symmetrically with respect to the d-axis of the magnetic pole 22.

The coordinate value [C], i.e., a distance [C], is smaller than the coordinate value [D], i.e., the distance [D], so that each of the second curvature centers P2 is closer to the axis m of the rotor core 21 than the first curvature center P1. Accordingly, the second layer permanent magnets 402 are located inward of the first layer permanent magnet 401 in the radially inward direction of the rotor core 21, and are located away from each other in the circumferential direction of the rotor core 21, and each toward the q-axis within the magnetic pole 22.

In the present embodiment, each of the second layer insertion holes 32 of the rotor core 21 has a plurality of second extending holes 32a. Each of the second extending holes 32a extends toward the outer peripheral side of the rotor 20 relative to the first arc surface 41. The second extending holes 32a extend toward the outer peripheral side of the rotor 20 from a position corresponding to the intersection of the first end surface 43 and the first arc surface 41 and from a position corresponding to the intersection of the second end surface 44 and the first arc surface 41, respectively. The flux barrier forming portions 312 of the second layer insertion hole 32 respectively extend from the second extending holes 32a of the second layer insertion hole 32 so as to approach the outer peripheral surface of the rotor core 21.

In the second layer S2 of the rotor core 21, one and the other of the second layer insertion holes 32 are adjacent to each other in the circumferential direction of the rotor core 21 and each include one and the other of the flux barrier forming portions 312. The flux barrier forming portion 312 of each second layer insertion hole 32 faces the flux barrier forming portion 312 of the adjacent second layer insertion hole 32. The rotor core 21 has a second layer bridge 27 between the one of the flux barrier forming portions 312 of the one of the second layer insertion holes 32 and the other of the flux barrier forming portions 312 of the other of the second layer insertion holes 32. That is, the rotor core 21 has the second layer bridge 27 that is located between the second layer permanent magnets 402 adjacent to each other in the second layer S2. This configuration prevents contact between the permanent magnets adjacent to each other within the same layer.

As illustrated in FIGS. 4 and 5, the three third layer permanent magnets 403 are inserted into the three third-layer insertion holes 33, respectively. The d-axis of the magnetic pole 22 passes through the widthwise center of one of the three third layer permanent magnets 403. In other words, the one of the third layer permanent magnet 403 is located on the d-axis of the magnetic pole 22. The remaining two third layer permanent magnets 403 are arranged symmetrically with respect to the d-axis and each of the two third layer permanent magnets 403 is located toward the q-axis.

The first arc surface 41 of the third layer permanent magnet 403 located on the d-axis of the magnetic pole 22 extends along an arc centered at a third curvature center P3. The third curvature center P3 is located at the coordinates (0, A) in the two-dimensional coordinate system. That is, the third curvature center P3 is located at a position radially spaced apart from the axis m of the rotor core 21 by a distance of the coordinate value [A]. The coordinate value [A], i.e., the distance [A], is smaller than the distance [C], so that the third curvature center P3 is closer to the axis m of the rotor core 21 than the second curvature center P2. Accordingly, the third layer permanent magnet 403 located in the center of the third layer S3 is located inward of the first layer permanent magnet 401 and the second layer permanent magnets 402 in the radially inward direction of the rotor core 21.

The first arc surface 41 of the third layer permanent magnet 403 located toward the q-axis extends along an arc centered at a fourth curvature center P4 in the magnetic pole 22. In the two-dimensional coordinate system, the fourth curvature center P4 of the first arc surface 41 of one of the third layer permanent magnets 403 located toward the q-axis is located at the coordinates (+X2, B), and the fourth curvature center P4 of the first arc surface 41 of the other of the third layer permanent magnets 403 located toward the q-axis is located at the coordinates (-X2, B). The absolute value of [+X2] and the absolute value of [-X2] are the same. Accordingly, each fourth curvature center P4 is located at (X2, B). That is, in the two-dimensional cross section of the rotor 20, each of the two fourth curvature centers P4 is located at a position offset toward the q-axis by the coordinate value [X2], i.e., distance [X2], from the d-axis of the magnetic pole 22. Accordingly, the two third layer permanent magnets 403 are arranged symmetrically with respect to the d-axis of the magnetic pole 22.

The absolute value of [+X2] of one of the fourth curvature centers P4 is greater than the absolute value of [+X1] of one of the second curvature centers P2. The absolute value of [-X2] of the other of the fourth curvature centers P4 is greater than the absolute value of [-X1] of the other of the second curvature centers P2. That is, the third layer permanent magnet 403 located toward the q-axis in the third layer S3 is located at a position closer to the q-axis than the second layer permanent magnet 402 in the second layer S2, which is located on the same side as the third layer permanent magnet 403 with respect to the d-axis.

The each of the two fourth curvature centers P4 is located at a position radially spaced apart from the axis m of the rotor core 21 by a distance of the coordinate value [B]. The coordinate value [B], i.e., the distance [B], is smaller than the distance [C], so that the fourth curvature center P4 is closer to the axis m of the rotor core 21 than the second curvature center P2. The three third layer permanent magnets 403 are located inward of the two second layer permanent magnets 402 in the radially inward direction of the rotor core 21.

In the present embodiment, each of the third layer insertion holes 33 of the rotor core 21 has a third extending hole 33a. Specifically, in this embodiment, the third layer insertion hole 33 on the d-axis has two third extending hole 33a, and each of the two third layer insertion holes 33 located toward the q-axis has one third extending hole 33a. Each of the third extending holes 33a extends toward the outer peripheral side of the rotor core 21 relative to the first arc surface 41 of the third layer permanent magnet 403 on the d-axis of the magnetic pole 22. One and the other of the third extending holes 33a of the third layer insertion hole 33 on the d-axis extend toward the outer peripheral side of the rotor 20 from a position corresponding to the intersection of the first end surface 43 and the first arc surface 41 and from a position corresponding to the intersection of the second end surface 44 and the first arc surface 41, respectively.

Each of the two third layer insertion holes 33 located toward the q-axis has the single extending hole 33a. That is, one of the third layer insertion holes 33 located toward the q-axis has the single extending hole 33a, and the single extending hole 33a extends toward the outer peripheral side of the rotor 20 from a position corresponding to the intersection of the first end surface 43 and the first arc surface 41. The other of the third layer insertion holes 33 located toward the q-axis has the single extending hole 33a, and the single extending hole 33a extends toward the outer peripheral side of the rotor 20 from a position corresponding to the intersection of the second end surface 44 and the first arc surface 41. Accordingly, each of the two third layer insertion holes 33 located toward the q-axis has an edge 33b adjacent to the d-axis, and the third extending hole 33a is not formed at the edge 33b of the third layer insertion hole 33.

In the third layer S3 of the rotor core 21, the three third layer insertion holes 33 are adjacent to each other in the circumferential direction of the rotor core 21 and each include the flux barrier forming portions 312. The flux barrier forming portion 312 of each third layer insertion hole 33 faces the flux barrier forming portion 312 of the adjacent third layer insertion hole 33. The rotor core 21 has a third layer bridge 28 between the flux barrier forming portions 312 of the third insertion holes 33 adjacent to each other in the circumferential direction of the rotor core 21. That is, the rotor core 21 has the third layer bridges 28 that are each located between the third layer permanent magnets 403 adjacent to each other in the third layer S3. The distance between the adjacent flux barrier forming portions 312 is defined as a third bridge width N. In the second layer S2, the distance between the flux barrier forming portions 312 of the second layer insertion holes 32 adjacent to each other in the circumferential direction is defined as a second bridge width M. The third bridge width N is approximately 1.4 times the second bridge width M. The dimension of the third layer bridge 28 is greater than the dimension of the second layer bridge 27 in the circumferential direction of the rotor core 21.

As illustrated in FIG. 4, in the magnetic pole 22, each of the third layer permanent magnets 403 located toward the q-axis is located at an angular position α from the d-axis, which is defined by the d-axis of the magnetic pole 22 and the imaginary line V of the third layer permanent magnet 403 that passes through the widthwise center of the third layer permanent magnet 403. In the magnetic pole 22, each of the second layer permanent magnets 402 is located at an angular position β from the d-axis, which is defined by the d-axis of the magnetic pole 22 and the imaginary line V of the second layer permanent magnet 402 that passes through the widthwise center of the second layer permanent magnet 402. The angular position α is greater than the angular position β. The third layer permanent magnet 403 located in the center of the third layer S3 is located at an angular position γ from the d-axis of the magnetic pole 22. The angular position γ is approximately half the angular position α. Accordingly, the third bridge width N is approximately 1.4 times the second bridge width M.

For the dimensions, distances, angles in each magnetic pole 22, the following inequalities (1), (2), and (3) are satisfied. $α > β$ $X 1 < X 2$

Both X1 and X2 are absolute values. $A < B < C < D$

In the magnetic pole 22, the first layer permanent magnet 401 and the third layer permanent magnet 403 located in the center of the third layer S3 are located on the d-axis of the magnetic pole 22. Accordingly, the first layer permanent magnet 401 and the third layer permanent magnet 403 in the center of the third layer S3 are arranged so that the first end surface 43 and the second end surface 44 are located within the same width.

In the magnetic pole 22, each of the second layer permanent magnets 402 is arranged so as to overlap the first layer permanent magnet 401 in the radial direction of the rotor core 21 in a region adjacent to the d-axis of the magnetic pole 22. Each of the second layer permanent magnets 402 is also arranged so as to overlap the third layer permanent magnet 403 on the d-axis in the radial direction of the rotor core 21 in a region adjacent to the d-axis of the magnetic pole 22 and overlap each of the third layer permanent magnets 403 located toward the q-axis in the radial direction of the rotor core 21 in a region adjacent the q-axis.

As illustrated in FIG. 2, a dimension between the first layer permanent magnet 401 forming the first layer S1 and each of the second layer permanent magnets 402 forming the second layer S2 is defined as a first distance L1. The first layer permanent magnet 401 and the second layer permanent magnet 402 each have an arc shape that is convex toward the inner peripheral side of the rotor core 21, and have the same shape. Furthermore, since the inequalities (1) to (3) are satisfied, the first distance L1 is largest near the d-axis of the magnetic pole 22 and gradually decreases as a position moves away from the d-axis of the magnetic pole 22 toward the q-axis. In other words, the distance between the first layer S1 and the second layer S2 adjacent to each other is smaller on the outer peripheral side of the rotor core 21 than at a position distant from the outer periphery of the rotor core 21, i.e., at a position adjacent to the d-axis, along the circumferential width direction of the permanent magnet 40.

In the rotor core 21, the region between the adjacent permanent magnetic layers where the first distance L1 is secured serves as a q-axis magnetic path. Accordingly, the dimension of the region serving as the q-axis magnetic path where the first distance L1 is secured is largest near the d-axis of the magnetic pole 22, and gradually decreases as a position moves away from the d-axis of the magnetic pole 22 toward the q-axis, i.e., toward the outer periphery of the rotor core 21.

When the permanent magnets 40 of the same shape are arranged, the first curvature center P1 and the second curvature center P2 are usually arranged on the d-axis. However, in this embodiment, the second curvature center P2 of the second layer permanent magnet 402 is offset from the first curvature center P1 by the dimension [X1]. This allows the q-axis magnetic path between the first layer S1 and the second layer S2 to be gradually reduced from the widthwise center of the first layer permanent magnet 401 toward the q-axis-side end of each of the second layer permanent magnets 402.

As illustrated in FIG. 5, a dimension between the second layer permanent magnet 402 forming the second layer S2 and each of the third layer permanent magnets 403 forming the third layer S3 is defined as a second distance L2. The second layer permanent magnet 402 and the third layer permanent magnet 403 each have an arc shape that is convex toward the inner peripheral side of the rotor core 21, and have the same shape. Furthermore, since the inequalities (1) to (3) are satisfied, the second distance L2 is largest near the d-axis of the magnetic pole 22 and gradually decreases as a position moves away from the d-axis of the magnetic pole 22 toward the q-axis. In other words, the distance between the second layer S2 and the third layer S3 adjacent to each other is smaller on the outer peripheral side of the rotor core 21 than at a position distant from the outer periphery of the rotor core 21, i.e., at a position adjacent to the d-axis, along the circumferential width direction of the permanent magnet 40.

When the third layer permanent magnets 403 are arranged, the first curvature center P1 and the fourth curvature center P4 are usually arranged on the d-axis. However, in this embodiment, the fourth curvature center P4 of the third layer permanent magnet 403 is offset from the first curvature center P1 by the dimension [X2]. This allows the q-axis magnetic path between the second layer S2 and the third layer S3 to be gradually reduced from the widthwise center of the third layer permanent magnet 403 toward the q-axis-side end of each of the two third layer permanent magnets 403 located toward the q-axis. Accordingly, the dimension of the region serving as the q-axis magnetic path where the second distance L2 is secured is largest near the d-axis of the magnetic pole 22, and gradually decreases as a position moves away from the d-axis of the magnetic pole 22 toward the q-axis, i.e., toward the outer periphery of the rotor core 21.

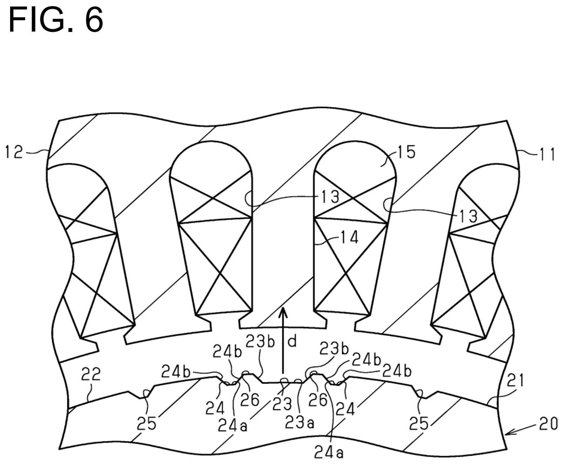

As illustrated in FIGS. 2 and 6, the rotor core 21 has one first recess 23, two second recesses 24, and two third recesses 25 that are recessed in the outer peripheral surface of the rotor core 21 and capable of facing the slots 13. Each of the first recess 23, the second recesses 24, and the third recesses 25 is recessed in the outer peripheral surface of the rotor core 21 toward the inner peripheral side of the rotor core 21. The outer peripheral surface of the rotor core 21 has two projections 26 each located between the first recess 23 and the second recess 24 that are adjacent to each other in the circumferential direction of the rotor core 21. Each of the projections 26 separates the first recess 23 and the second recess 24.

The first recess 23 is located on the d-axis of the magnetic pole 22. The first recess 23 is recessed in the radial direction of the rotor core 21, and has a bottom surface 23a, and first side surfaces 23b extending radially outward from the ends of the bottom surface 23a that define the bottom surface 23a in the circumferential direction of the rotor core 21. The bottom surface 23a of the first recess 23 is located on the d-axis of the magnetic pole 22 in the axial view.

The second recess 24 is recessed in the radial direction of the rotor core 21, and has a bottom surface 24a and second side surfaces 24b extending radially outward from the ends of the bottom surface 24a that define the bottom surface 24a in the circumferential direction of the rotor core 21. Each of the projections 26 is formed by one of the first side surfaces 23b of the first recess 23 and one of the second side surfaces 24b of the second recess 24. That is, the projections 26 are formed on the outer peripheral surface of the rotor core 21 respectively on the opposite sides of the bottom surface 23a of the first recess 23 in the circumferential direction of the rotor core 21.

The opening widths of the first recess 23 and the second recesses 24 in the circumferential direction of the rotor core 21 gradually increase from the bottom surface 23a and the bottom surfaces 24a in the radial direction the rotor core 21. The opening width of the first recess 23 is greater than the opening width of each of the second recesses 24.

As illustrated in FIG. 4, each of the opposite ends of the first layer permanent magnet 401 in the circumferential direction is located at an angular position δ from the d-axis. Each of the second recesses 24 is located within the range from the d-axis to the angular position δ, and each of the third recesses 25 is located outside the range from the d-axis to the angular position δ. The third recess 25 is at a position in a circumferential direction defined by the second arc surface 42 of the first layer permanent magnet 401. That is, as illustrated in FIG. 2, the third recess 25 is located on the q-axis magnetic path between the first layer permanent magnet 401 and the second layer permanent magnet 402.

According to the aforementioned embodiment, the following operations and advantageous effects are achieved.
(1) In each of the magnetic poles 22 of the rotating electrical machine 10, the magnetic permeability of the permanent magnet 40 is lower than that of the rotor core 21. The magnetic flux in the d-axis direction passes through the permanent magnets 40 having a relatively low magnetic permeability, resulting in a high magnetic reluctance and thus a small d-axis inductance. In contrast, the magnetic flux in the q-axis direction does not pass through the permanent magnets 40 but only flows through the rotor core 21 having a relatively high magnetic permeability, resulting in a low magnetic reluctance and thus a large q-axis inductance. In a rotating magnetic field, a reluctance torque is produced due to a difference between the d-axis inductance and the q-axis inductance.

In the present embodiment, the permanent magnets 40 are arranged in an arch shape such that the permanent magnets 40 are convex toward the inner peripheral side of the rotor core 21. This configuration facilitates generation of the difference in the magnetic reluctance between the d-axis magnetic path and the q-axis magnetic path in the rotor 20, thereby allowing the reluctance torque to increase in the rotor core 21. Furthermore, the first distance L1 and the second distance L2 are largest near the d-axis of the magnetic pole 22, and gradually decrease as a position moves away from the d-axis of the magnetic pole 22 toward the q-axis, i.e., toward the outer periphery of the rotor core 21, along the circumferential direction of the permanent magnet 40. This configuration particularly enhances the effect of improving the reluctance torque generated in the rotor core 21.

Each of the magnetic poles 22 includes the six permanent magnets 40, and the six permanent magnets 40 have the same shape. This allows the reduction of the manufacturing cost related to the permanent magnets 40, compared to a configuration in which the six permanent magnets 40 have different shapes so that the first distance L1 and the second distance L2 are different. Therefore, the rotating electrical machine 10 achieves a high reluctance torque while maintaining a low manufacturing cost.

(2) The permanent magnets 40 are ferrite magnets. This reduces the material cost of the permanent magnets 40 compared to rare earth magnets, for example. Furthermore, this reduces the back electromotive force generated when the rotating electrical machine 10 rotates at a high speed, since ferrite magnets have a lower residual magnetic flux density than that of rare earth magnets. In particular, although the back electromotive force is high in the rotating electrical machine 10 to which a high voltage is applied, the permanent magnets 40 made of ferrite magnets are capable of reducing a force that causes the rotating electrical machine 10 to rotate in the reverse direction, thereby ensuring the output of the rotating electrical machine 10 even during high-speed rotation.

(3) In the magnetic pole 22, the six permanent magnets 40 of the same shape form the three layers. The six permanent magnets 40 are arranged so that the inequalities (1) to (3) are satisfied in order to ensure that the first distance L1 and the second distance L2 are largest near the d-axis of the magnetic pole 22, i.e., on the inner peripheral side of the rotor core 21, and gradually decrease as a position moves toward the outer periphery of the rotor core 21.

Each of the second layer permanent magnets 402 in the second layer S2 is offset toward the q-axis by the dimension [X1] from the d-axis of the magnetic pole 22, and each of the third layer permanent magnets 403 located toward the q-axis in the third layer S3 is offset toward the q-axis within the magnetic pole 22 by the dimension [X2] from the d-axis of the magnetic pole 22. This enables that the first distance L1 and the second distance L2 are largest near the d-axis of the magnetic pole 22, i.e., on the inner peripheral side of the rotor core 21, and gradually decrease as a position moves toward the outer periphery of the rotor core 21 along the circumferential direction of the permanent magnet 40.

(4) In the magnetic circuit design of the rotating electrical machine 10 having the plurality of layers in which the permanent magnets 40 are arranged, the dimension of the region between the layers serving as the q-axis magnetic path, i.e., the distance between the layers, is usually made constant. However, in the present embodiment, the first distance L1 and the second distance L2 are largest near the d-axis of the magnetic pole 22, and gradually decrease as a position moves away from the d-axis of the magnetic pole 22 toward the q-axis so that the region between the layers, which serves as the q-axis magnetic path, changes. In addition, the six permanent magnets 40 have an arc shape and the same shape. That is, in the present embodiment, the six permanent magnets 40 have the same shape in order to reduce the manufacturing cost of the rotating electrical machine 10 while a different method from a normal magnetic circuit design is adopted. The six permanent magnets 40 are arranged so that the inequalities (1) to (3) are satisfied, thereby improving the reluctance torque while suppressing the manufacturing cost of the rotating electrical machine 10. Accordingly, the rotating electrical machine 10 is highly ingenious.

(5) The first layer insertion hole 31 has the two first extending holes 31a, and each of the second layer insertion holes 32 has the two second extending holes 32a. Each of the two third layer insertion holes 33 located toward the q-axis has the third extending hole 33a that is located at a position formed other than the edge 33b of the third layer insertion hole 33. The presence of the first to third extending holes 31a to 33a allows reduction of the magnetic flux that circulates within the permanent magnet 40, thereby reducing the irreversible demagnetization field within the permanent magnet 40. Furthermore, the third extending hole 33a at the edge 33b of each of the two third layer insertion holes 33 located toward the q-axis in the third layer S3 is not located at the edge 33b of the third layer insertion hole 33. That is, in the third layer S3, the third extending hole 33a is not located at a position where the magnetic reluctance of the d-axis magnetic path tends to increase. This suppresses an increase in magnetic reluctance of the d-axis magnetic path while the extending holes 31a to 33a are provided.

(6) The third layer S3 is located inward of the first layer S1 and the second layer S2 in the radially inward direction of the rotor core 21. During rotation of the rotor 20, centrifugal force arising from the mass of components of the rotor core 21 located on the outer circumferential side is supported by the inner circumferential components, resulting in a large tensile stress acting on the inner circumferential components of the rotor core 21. According to the present embodiment, the third bridge width N in the third layer S3 is greater than the second bridge width M in the second layer S2. This configuration ensures the strength of the third layer bridge 28, which is subjected to a large tensile stress.

That is, although the plurality of permanent magnets 40 are arranged in the same layer, such as the second layer S2 and the third layer S3, the bridge widths of the bridges between the insertion holes 30 are different between the layers. This configuration allows the strength of the rotor core 21 to be ensured so as to suppress a decrease in the output of the rotating electrical machine 10 in which the permanent magnets 40 form three layers within the magnetic pole 22.

(7) In the rotor 20, the third layer permanent magnet 403 located in the center of the third layer S3 is located at the angular position γ from the d-axis of the magnetic pole 22. The third layer permanent magnet 403 located toward the q-axis is located at the angular position α from the d-axis. The angular position γ is approximately half the angular position α. This allows the dimension of the third layer bridge 28 to be greater than the dimension of the second layer bridge 27 in the circumferential direction in order to ensure the strength of the third layer bridge 28.

(8) The magnetic reluctance of the tooth 14 is significantly different from that of the air region in the slot 13. Accordingly, the amount of magnetic flux flowing from the permanent magnets 40 varies depending on the rotational position of the rotor 20, so that pulsation occurs. The first recess 23, the second recesses 24, and the third recesses 25 are recessed in the outer peripheral surface of the rotor core 21. The presence of the first recess 23, the second recesses 24, and the third recess 25 offsets the pulsation caused by the presence of the slot 13. This reduces cogging torque, thereby reducing torque ripple. In other words, this configuration reduces the torque ripple and induced voltage waveform distortion, thereby improving the controllability of the rotating electrical machine 10 and reducing noise.

(9) The six permanent magnets 40, which form the magnetic pole 22, have the same shape. The first end surface 43 and the second end surface 44 of each permanent magnet 40 extend in the direction of the imaginary line V. That is, the first end surface 43 and the second end surface 44 are parallel to each other. Cutting a ring-shaped material so that the first end surface 43 and the second end surface 44 are parallel to each other is easier than cutting a material into sector-like pieces. Accordingly, this configuration facilitates the manufacturing of the permanent magnets 40. In addition, since the first end surface 43 and the second end surface 44 of each permanent magnet 40 extend in the direction of the imaginary line V, the magnetic force of the permanent magnet 40 is effectively utilized by the rotating electrical machine 10.

The embodiment may be modified as below. The embodiment may be combined with the following modifications within technically consistent range.

The second bridge width M may be equal to the third bridge width N, or greater than the third bridge width N. The angular position γ and the angular position α may be changed to change the ratio of the second bridge width M to the third bridge width N.

The first layer insertion hole 31 may be provided without the first extending holes 31a, and the second layer insertion hole 32 may be provided without the second extending holes 32a. The third layer insertion hole 33 may be provided without the third extending hole 33a. The third extending hole 33a of the third layer insertion hole 33 may be formed at the edge 33b located toward the d-axis.

Only the first recess 23 may be formed in the outer peripheral surface of the rotor core 21. In this configuration, the second recesses 24 and the third recesses 25 are not formed, and therefore the projections 26 are not formed.

Only the first recess 23 and the second recesses 24 may be formed in the outer peripheral surface of the rotor core 21.

The magnet insertion portions 311 of the two second layer insertion holes 32 may be connected to each other. In this configuration, the second layer bridge 27 is not formed between the second layer permanent magnets 402 in the two magnet insertion portions 311. The magnet insertion portions 311 of the three third layer insertion holes 33 may be connected to each other. In this configuration, the third layer bridges 28 are not formed between the third layer permanent magnets 403 in the three third magnet insertion portions 311.

The magnetic pole 22 may be formed by three permanent magnets 40 consisting of one first layer permanent magnet 401 and two second layer permanent magnets 402, or may be formed by five permanent magnets 40 consisting of two second layer permanent magnets 402 and three third layer permanent magnets 403.

The permanent magnets 40 may form four layers within the magnetic pole 22. In this configuration, the magnetic pole 22 may be formed by one first layer permanent magnet 401, two second layer permanent magnets 402, three third layer permanent magnets 403, and four fourth layer permanent magnets.

For each of the fourth curvature centers P4 of the two third layer permanent magnets 403 located toward the q-axis in the third layer S3, the absolute value of [+X2] and the absolute value of [-X2] may be different. For each of the second curvature centers P2 of the two second layer permanent magnets 402 in the second layer S2, the absolute value of [+X1] and the absolute value of [-X1] may be different.

The first end surface 43 and the second end surface 44 of the permanent magnet 40 of the same shape may not extend in the direction of the imaginary line V. That is, the first end surface 43 and the second end surface 44 do not need to have a shape based on the imaginary line V as long as the permanent magnets 40 have the same shape.

The permanent magnets 40 may be rare earth magnets.

The rotating electrical machine 10 may have eight magnetic poles 22.

The magnetization directions of the rotor core 21 may be parallel to each other.

## Claims

1. A rotating electrical machine (10) comprising: a stator (11); and a rotor (20) disposed inside of the stator (11), **characterized in that**
the rotor (20) includes:
a rotor core (21) having a plurality of insertion holes (30); and
a plurality of permanent magnets (40) respectively inserted into the plurality of insertion holes (30), the permanent magnets (40) forming a magnetic pole (22),
each of the permanent magnets (40) has an arc shape that is convex toward an inner peripheral side of the rotor core (21), and has: a first arc surface (41) located on an outer peripheral side of the rotor core (21); and a second arc surface (42) located on the inner peripheral side of the rotor core (21),
the permanent magnets (40) form two or more layers (S1-S3) that are arranged in a radially inward direction of the rotor core (21),
the number of permanent magnets (40) per layer (S1-S3) increases by one in the radially inward direction of the rotor core (21),
the permanent magnets (40) have the same shape, and
a distance (L1, L2) between the layers (S1-S3) adjacent to each other is smaller on the outer peripheral side of the rotor core (21) than at a position distant from an outer periphery of the rotor core (21) along a circumferential width direction of each permanent magnet (40).

2. The rotating electrical machine (10) according to claim 1, **characterized in that**
the permanent magnet (40) has opposite end surfaces (43, 44) in a circumferential direction of the permanent magnet (40), and the opposite end surfaces (43, 44) respectively connect opposite ends of the first arc surface (41) and the second arc surface (42), and
the opposite end surfaces (43, 44) of the permanent magnet (40) extend in a direction of an imaginary line (V), the imaginary line (V) passing through a widthwise center of the permanent magnet (40) and extending in a thickness direction defined between the first arc surface (41) and the second arc surface (42).

3. The rotating electrical machine (10) according to claim 1 or 2, **characterized in that**
a bridge (27, 28) is located between the permanent magnets (40) adjacent to each other in the same layer (S2, S3).

4. The rotating electrical machine (10) according to claim 1 or 2, **characterized in that**
the magnetic pole (22) includes six magnetic poles (22),
within each of the six magnetic poles (22), the layers (S1-S3) include a first layer (S1), a second layer (S2) located inward of the first layer (S1) in the radially inward direction of the rotor core (21), and a third layer (S3) located inward of the second layer (S2) in the radially inward direction of the rotor core (21),
the plurality of permanent magnets (40) includes: a single first layer permanent magnet (401) disposed in the first layer (S1); two second layer permanent magnets (402) disposed in the second layer (S2); and three third layer permanent magnets (403) disposed in the third layer (S3),
the first layer permanent magnet (401) is located on a d-axis,
the second layer permanent magnets (402) are arranged symmetrically with respect to the d-axis,
one of the third layer permanent magnets (403) is located on the d-axis, and the remaining two third layer permanent magnets (403) are arranged symmetrically with respect to the d-axis and each located toward a q-axis,
in a two-dimensional coordinate system,
an axis (m) of the rotor core (21) is located at coordinates (0, 0),
a curvature center (P1) of the first layer permanent magnet (401) is located at coordinates (0, D),
a curvature center (P2) of the second layer permanent magnet (402) is located at coordinates (X1, C), and the second layer permanent magnet (402) is located at an angular position β from the d-axis,
a curvature center (P3) of the third layer permanent magnet (403) located on the d-axis is located at coordinates (0, A), and
a curvature center (P4) of each of the two third layer permanent magnets (403) located toward the q-axis is located at coordinates (X2, B), and each of the two third layer permanent magnets (403) is located at an angular position α from the d-axis, and $α > β , X 1 < X 2 , and A < B < C < D$ are satisfied.

5. The rotating electrical machine (10) according to claim 4, **characterized in that**
the rotor core (21) has: a second layer bridge (27) that is located between the second layer permanent magnets (402) adjacent to each other in a circumferential direction of the rotor core (21); and a third layer bridge (28) that is located between the third layer permanent magnets (403) adjacent to each other in the circumferential direction of the rotor core (21), and
a dimension of the third layer bridge (28) is greater than a dimension of the second layer bridge (27) in the circumferential direction of the rotor core (21).

6. The rotating electrical machine (10) according to claim 4, **characterized in that**
each of the insertion holes (30) has an extending hole (31a-33a) that extends toward the outer peripheral side relative to the first arc surface (41), and
each of the insertion holes (33) into which the third layer permanent magnet (403) located toward the q-axis is inserted has an edge (33b) adjacent to the d-axis, and the extending hole (33a) is not formed at the edge (33b) of the insertion hole (33).

7. The rotating electrical machine (10) according to claim 1 or 2, **characterized in that**
the rotor core (21) has a recess (23-25) that is recessed in an outer peripheral surface of the rotor core (21) toward the inner peripheral side of the rotor core (21) and positioned so as to face a slot (13) between teeth (14) of the stator (11).

8. The rotating electrical machine (10) according to claim 7, **characterized in that**
the recess (23) has a bottom surface (23a) that is located on the d-axis of the magnetic pole (22), and
the rotor core (21) has projections (26) that are formed on the outer peripheral surface of the rotor core (21) respectively on opposite sides of the bottom surface (23a) of the recess (23) in the circumferential direction of the rotor core (21).
